(19) Europäisches Patentamt
European Patent Office
Office européen des brevets

(11) EP 0 787 409 B1

(12) **EUROPEAN PATENT SPECIFICATION**

(45) Date of publication and mention
of the grant of the patent:
**16.04.2003 Bulletin 2003/16**

(21) Application number: **95934556.2**

(22) Date of filing: **29.09.1995**

(51) Int Cl.7: **H04N 5/76**

(86) International application number:
**PCT/US95/12421**

(87) International publication number:
**WO 96/013128 (02.05.1996 Gazette 1996/20)**

(54) **DIGITAL VCR WITH TRICK PLAY STREAM DERIVATION**

DIGITALER VIDEORECORDER MIT UMSCHALTUNG AUF SPEZIALWIEDERGABE

MAGNETOSCOPE NUMERIQUE A CASSETTE AVEC UNE DERIVATION PERMETTANT UN
PASSAGE A DES VITESSES NON STANDARD

(84) Designated Contracting States:
**DE ES FR GB IT PT**

(30) Priority: **20.10.1994 GB 9421206**

(43) Date of publication of application:
**06.08.1997 Bulletin 1997/32**

(73) Proprietor: **THOMSON CONSUMER
ELECTRONICS, INC.
Indianapolis, IN 46290-1024 (US)**

(72) Inventor: **McLAREN, David, Lionel
Sunnyvale, CA 94086 (US)**

(74) Representative: **Hartnack, Wolfgang, Dipl.-Ing.
Deutsche Thomson-Brandt GmbH
European Patent Operations
Karl-Wiechert-Allee 74
30625 Hannover (DE)**

(56) References cited:
| | |
|---|---|
| EP-A- 0 353 758 | EP-A- 0 505 985 |
| EP-A- 0 522 835 | EP-A- 0 562 845 |
| EP-A- 0 579 156 | EP-A- 0 606 857 |
| EP-A- 0 613 297 | EP-A- 0 617 559 |
| US-A- 5 282 049 | US-A- 5 301 027 |

- "VCR for recording a feature mode information
signal on a record carrier, so as to enable a
feature mode upon reproduction." RESEARCH
DISCLOSURE, no. 366, October 1994, HAVANT
GB, page 581 XP000485895
- J. BOYCE ET AL.: "Fast Scan Technology for
Digital Video Tape Recorders" IEEE
TRANSACTIONS ON CONSUMER
ELECTRONICS, vol. 39, no. 3, August 1993, NEW
YORK US, pages 186-191, XP000396278

**Description**

This invention relates to the field of digital video recording, and in particular to the derivation, recording and reproduction of MPEG like advanced television signals at non-standard speeds.

BACKGROUND OF THE INVENTION

A digital video cassette recorder employing a helical scanning format has been proposed by a standardization committee. The proposed standard specifies digital recording of standard definition SD television signals, for example, NTSC or PAL, and high definition television signals having an MPEG compatible structure, such as a proposed Grand Alliance or GA signal. The SD recorder utilizes a compressed component video signal format employing intra field/frame DCT with adaptive quantization and variable length coding. The SD digital VCR or DVCR may digitally record either NTSC or PAL television signals and has sufficient data recording capability to record an advanced television signal.

A specification of the GA signal is included in a draft specification document titled Grand Alliance HDTV System Specification, published in the 1994 Proceeding of the 48th Annual Broadcast Engineering Conference Proceedings, March 20 - 24 1994. The GA signal employs an MPEG compatible coding method which utilizes an intraframe coded picture, termed I frame, a forward predicted frame, termed a P frame and a bidirectionally predicted frame, termed a B frame. These three types of frames occur in groups known as GOPs or Groups Of Pictures. The number of frames in a GOP is user definable but may comprise, for example, 15 frames. Each GOP contains one I frame, which may be abutted by two B frames, which are followed by a P frame.

In an analog consumer VCR, "Trick Play" or TP features such as picture in forward or reverse shuttle, fast or slow motion, are readily achievable, since each recorded track typically contains one television field. Hence, reproduction at speeds other than standard, may result in the reproducing head, or heads, crossing multiple tracks and recovering recognizable picture segments. The picture segments may be abutted and provide a recognizable and useful image. An advanced television or MPEG like signal may comprise groups of pictures or GOPs. The GOP may, for example, comprise 15 frames and each frame may be recorded occupying multiple tracks on tape. For example, if 10 tracks are allocated to each frame, then a 15 frame GOP will comprise 150 tracks. During play speed operation, I frame data is recovered which enables the decoding and reconstruction of the predicted P and B frames. However, when a DVCR is operated at a non-standard reproduction speed, the replay heads transduce sections or segments from the multiple tracks. Unfortunately these DVCR tracks no longer represent discrete records of consecutive image fields. Instead these segments contain data resulting mainly from predicted frames. However, since predicted P and B frames require preceding data to facilitate decoding the possibility of reconstructing any usable frames from the reproduced pieces of data is greatly diminished. In addition the MPEG data stream is particularly unforgiving of missing or garbled data. Thus, to provide "Trick Play" or non-standard speed replay features requires that specific data be recorded, which when reproduced in a TP mode, is 'capable of image reconstruction without the use of adjacent or preceding frame information. The specific data, or "Trick Play" data must be semantically correct to allow MPEG decoding. In addition, a selection of "Trick Play" speeds, may require different TP data derivation and may require TP speed specific recorded track locations.

To be capable of reconstruction without preceding frame data requires that "Trick Play" specific data be derived from I frames. The "Trick Play" specific data must be syntactically and semantically correct to allow decoding, for example, by a GA or MPEG compatible decoder. In addition the "Trick Play" or TP data must be inserted into the MPEG like data stream for recording together with the normal play, MPEG like signal. This sharing of the recording channel data capacity may impose constraints in terms of TP data bit rate which may be provided within the available track capacity. The TP data bit rate may be variously utilized or shared between spatial and or temporal resolution in the derived or reconstructed TP image.

Reproduced "Trick Play" image quality may be determined by the complexity of the TP data derivation. For example, a consumer DVCR must derive TP data during recording, essentially in real-time and with only nominal additional data processing expense added to the DVCR cost. Thus real-time consumer DVCR "Trick Play" image quality may appear inferior to TP image data derived by non-real time image processing utilizing sophisticated digital image processing. With non-real time TP image processing for example, an edited program may be processed, possibly on a scene by scene basis, possibly at non-real-time reproduction speeds, to enable the use of sophisticated digital image processing techniques. Such non-real time processing may inherently provide higher Quality "Trick Play" images than that attainable with real time processing.

EP-A-0 562 845 discloses in a trick play recording DC components within certain areas.

## SUMMARY OF THE INVENTION:

The invention is as set out in claim 1.

A method for generating in real-time an MPEG compatible digital image representative signal for recording to facilitate reproduction at more than one speed. The method comprises the steps of: receiving a data stream comprising an MPEG compatible digital image representative signal; decoding the data stream to extract intra-coded data; storing predetermined intra-coded data from the extracted intra-coded data to form intra-coded frames having reduced spatial resolution; periodically selecting an intra-coded frame from the stored frames having reduced spatial resolution; sequentially selecting the periodically selected intra-coded frame and the data stream to form a bit stream; and recording the bit stream in real time.

## BRIEF DESCRIPTION OF THE DRAWING:

FIGURE 1 is a simplified block diagram of an inventive system for the real-time generation of a "trick-play" data stream having low resolution.

FIGURE 2 shows a simplified block diagram of a further inventive system for the real-time generation of a full resolution, "trick-play" data stream.

FIGURE 3 shows a simplified block diagram illustrating an inventive method for generating low resolution "trick-play" data streams for inclusion in pre-recorded digital records.

FIGURE 4 shows a simplified block diagram illustrating a further inventive method for generating "trick-play" data streams use for inclusion in pre-recorded digital records.

FIGURE 5 illustrates the derivation of predicted macroblock DC coefficients.

FIGURE 6 shows a simplified partial block diagram illustrating a further inventive method for non-real-time generation of pre-recorded records.

FIGURE 7 shows a simplified partial block diagram illustrating another inventive method for non-real-time generation of pre-recorded records.

## DETAILED DESCRIPTION:

In a consumer digital video cassette recorder major considerations in the real-time generation of a trick-play stream are the complexity and cost of processing required, and the need to keep this cost at a reasonable level. For this reason, the processing utilized in the generation of a real-time trick-play data stream may be limited to extracting pieces of the existing bit stream and implementing minor modifications to bit-stream parameters.

"Trick-play" data streams must be produced in real-time by extracting independent intra-information pieces from the original data stream. This intra-information may come from intra-frames, intra-slices, and/or intra-macroblocks. The source selected for I frame data derivation depends on the form of intra refresh employed in the original stream, and for exemplary purposes it is assumed that either intra-frame or intra-slice refresh method is employed.

In a first inventive method of real-time generation, a low spatial resolution "Trick Play" data stream is derived. The low spatial resolution trick-play stream may, for example, have resolution according to the CCIR 601 standard, (720 x 480 pixels), regardless of the original HDTV stream resolution. Since the effective available bit-rate for trick-play streams is limited to nominally 2 M, bits/sec., employing low spatial resolution in this manner results in fewer bits being used per frame, and thus a relatively high temporal resolution may be achieved. However, this low spatial resolution may only be practical if an advanced television decoder and display is capable of such resolution.

In a second inventive method a trick-play stream is generated having the same resolution, or pixel count, as the original HDTV material. However, since the usable trick-play bit-rate is limited by the recording channel capacity of nominally 2 M. bits/sec., a trade-off exists between spatial and temporal resolution. Thus the provision of a full spatial resolution "Trick Play" mode effectively requires that the temporal resolution be reduced to remain commensurate with the TP data channel capacity.

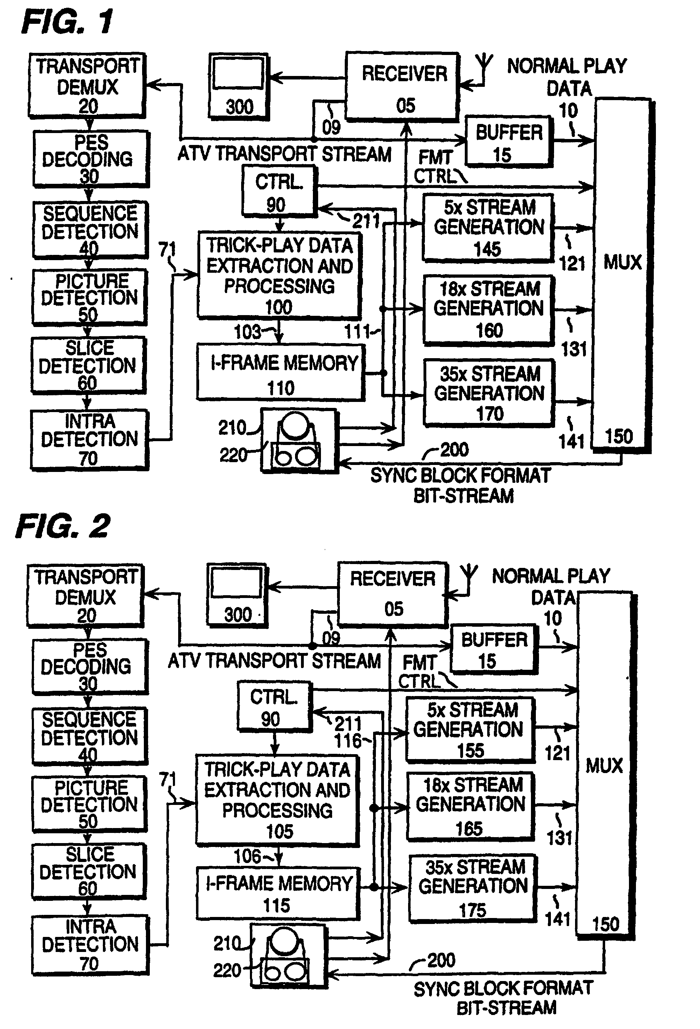

The first inventive method for real-time generation of a low spatial resolution "Trick Play" data is illustrated in FIGURE 1. In this exemplary block diagram, trick-play speeds of 5x, 18x and 35x are generated. For each TP speed, low-resolution, intra-coded frames are constructed from a received MPEG like transport stream. By detecting MPEG header information in the transport stream down to the slice level, intra slices can be extracted, processed and used to create a single I-frame in memory 110. The extraction and processing stage 100 performs three tasks; extracting macroblocks for the construction of a TP I-frame, re-encoding DC transform coefficients when necessary using DPCM encoding, and discarding unwanted AC transform coefficients when necessary. Having constructed and stored a low-resolution TP I-frame in memory 110, it is utilized in the generation of speed specific data streams for each trick-play speed.

A radio frequency carrier, modulated responsive to an MPEG compatible signal, is received by receiver 05.

The modulated carrier may be sourced from either an antenna or a cable, not shown. Receiver 05 demodulates and processes the received carrier to produce an MPEG compatible advanced television transport stream 09.

The advanced television transport stream 09, is demultiplexed in block 20 to obtain only the Packetized Elemental Stream or PES stream corresponding to the advanced television video information. The PES stream is decoded in block 30 to extract from the packets, the MPEG encoded video stream payload. Having extracted the MPEG encoded stream, the required intra-coded information may be detected and extracted. Sequence detection block 40 examines the bit stream for the occurrence of a start code characterized by twenty five 0's followed by 1, followed by an 8 bit address indicating MPEG video header. Picture detection is performed in block 50 and in block 60 slice layers are detected. Since an intra coded "trick-play" I frame is to be constructed only intra-slices are extracted. Intra-slices contain only intra-coded macroblocks, and are characterized by a 1-bit intra_slice flag in the slice header. Thus when the intra_slice flag is set to 1 the entire slice is passed to the "data extraction and processing" stage 100. The intra detection process of block 70 assumes that either intra-frame or intra-slice refresh techniques are employed and also that the intra-slice flag in the slice header is set when appropriate. If the intra_slice flag is not set or intra-macroblock refresh is used then a further level of detection down to macroblock level is required.

The data extraction and processing stage 100 selects from the intra-coded macroblocks extracted in block 70, only intra information which is utilized for constructing various trick-play data streams. In addition block 100 performs any processing which may be necessary to ensure the syntactic and semantic correctness for MPEG compatibility of the resulting reconstructed TP I-frame. Since the reconstructed TP I-frame is of lower spatial resolution than the original MPEG stream, only a sub-set of the detected intra-macroblocks is required. To determine which macroblocks or MBs are to be kept and which are to be discarded, either a mathematical function or a predefined look-up table may be employed. The resulting lower spatial resolution frame results from the selected patchwork of macroblocks. A controller stage 90 is coupled to processing stage 100 and provides either, calculation required by the mathematical function or provides the look up table for determining macroblock selection.

The relationship between the MB position in the new low-resolution I-frame, (mb(i, j), i=0, 1, 2, ... n-1, j = 0, 1, 2, ... m-1, where m and n are the new I-frame width and height in MBs respectively and i and j refer to the MB row and column) and the original full-resolution frame ((MB(I, J), I=0, 1, 2, ... N-1, J=0, 1, 2, ... M-1, where M and N are the original frame width and height and I and J are the MB row and column), the relationship is given by:

$$i \text{ (low-resolution row)} = [I.(n-1)/(N-1)]$$

$$j \text{ (low-resolution column)} = [J.(m-1)/(M-1)]$$

where the product of the square brackets [x] denotes the integer value closest to x.

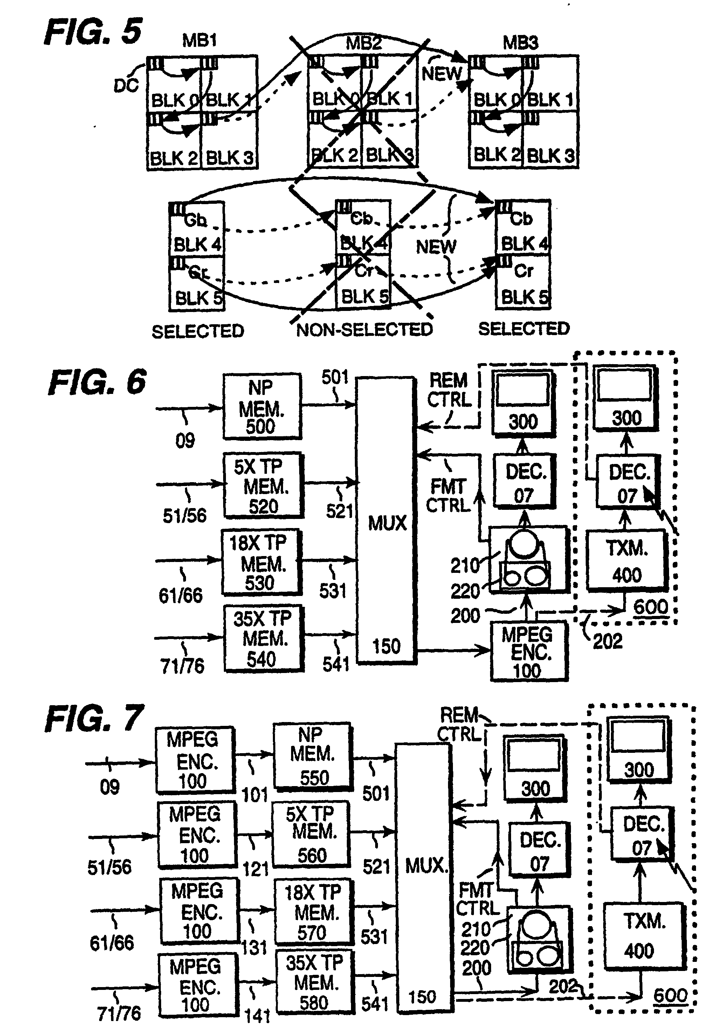

The low resolution TP I frame utilizes a subset of the macroblocks from the original frame with the remaining non-selected MBs being discarded. FIGURE 5 illustrates an exemplary 4:2:0 sampled signal comprising three intra-coded macroblocks MB1, MB2 and MB3, where each comprises blocks 0, 1, 2, 3, 4 and 5. Macroblock 2 is crossed through to illustrate non-use in constructing the reduced resolution TP I frame. The DC coefficients of each luminance and chrominance block are depicted in FIGURE 5 with dark stripes. The DC coefficients are predicted from within each macroblock, with the DC coefficient of the first block of an MB being predicted from the last DC coefficient of the immediately preceding MB of the slice. The arrows in FIGURE 5 illustrate the prediction sequence. Thus, if the preceding MB, for example, MB 2 of FIGURE 5 is not selected, certain DC coefficients must be re-calculated from the newly abutted macroblock, as depicted by arrows NEW of FIGURE 5, and re-encoded using DPCM. This re-encoding process is performed as the macroblocks are written to the I-frame memory 110.

If the HDTV video sequence originated from an interlaced scanning source, an optional processing step may be included to remove interlace "flicker" exhibited by frozen interlaced fields containing motion. If the temporal resolution of the reconstructed trick-play stream is such that the same frame (two fields) is displayed for more than one frame period, then such interlaced "flicker" may be very noticeable. In field-coded macroblocks this "flicker" artifact may be eliminated by copying the top two blocks of the macroblock, blocks 0 and 1, to the lower two blocks, blocks 2 and 3. This copying within the macroblock effectively makes both fields the same thus removing any field-to-field motion from the frame. This re-encoding process is performed as the macroblocks are written to the I-frame memory 110.

A further function performed by processing stage 100 is the removal of AC coefficients from each macroblock which cannot be accommodated in the newly constructed TP I-frame due to the low bit-rate available for the trick-play streams. To accomplish this, each block is variable-length-decoded to the point where the block will be padded with zeros, indicating the last coefficient of that block. The number of bits for each block are stored and accumulate in a buffer. The bits are counted and when a count exceeds a predetermined number the remaining AC coefficients are unused or deleted. The number of bits per TP MB depends on the overall rate allowed for each trick-play stream and the temporal resolution or number of frame updates per second.

The block diagram of FIGURE 1 illustrates the formation of trick-play data streams having the same allocated bit-rate. If the rate differs significantly between TP speeds, for example, to provide differing resolution at each speed, then the number of AC coefficients retained in I-frame memory 110 will also differ for each speed. Hence I-frame memory 110 cannot be shared and separate I-frame memories may be required for each TP speed or bit rate.

The inventive low-resolution TP I-frame assembled in I-frame memory 110 is coupled to three trick-play stream generation stages; 5 times, block 145; 18 times, block 160 and 35 times block 170. In exemplary FIGURE 1, each trick-play stream may be allocated the same bit-rate and temporal resolution, which may represent a preferred configuration. However, not every reconstructed TP I-frame is used for each TP speed. For example, if the I-frame refresh rate in the original stream is once every fifteen frames (M=15) and the temporal resolution used by each trick-play stream is selected to be three, i.e. the number of frame times between frame updates, then for 5 times speed;

$$(5x \text{ speed}).(3 \text{ frame repeats})/(15 \text{ frame refresh}) = 1.0$$

thus every TP I-frame will be used. Similarly for 18x and 35x speeds,

$$(18).(3)/(15) = 3.6$$

$$(35).(3)/(15) = 7.0$$

Thus at 18x speed approximately every third or fourth I-frame is used, and at 35x speed every seventh I-frame is used. If it is assumed that the intra-refresh period in an advanced television stream is 0.5 seconds (M=15 for 30 fps source) then a three-frame holding time for 5x speed is the highest possible TP temporal resolution. For simplicity and consistency a three-frame holding time may be used for the remaining TP speeds. A higher temporal resolution of two-frames or single-frame holding time could be used for higher TP speeds since lower temporal resolution at higher speeds may give a false sense of slower than actual trick-play speed. Assuming that the effective trick-play bit-rate is constant, the provision of a higher temporal resolution would consequently require a lower spatial resolution quality.

The reconstructed TP I-frame is read from memory 110 and packaged, according to TP speed, by blocks 145, 160 and 170 which add the appropriate MPEG picture headers and a PES layer. The advanced television transport stream 09 is buffered by buffer 15, which generates signal 10, a transport stream for normal play speed processing. Normal play transport stream 10 is coupled to multiplexor MUX 150. Multiplexor MUX 150 is controlled responsive to recorder 210 servo signals to generate an output bit stream having a sequence which when recorded produces a predetermined track format. The recorded track format is selected to provide the desired recorded TP bit rate and to facilitate specific physical location of speed specific TP I-frame packets within specific recorded tracks. The recorded track format thus facilitates replay at normal speed and at the predetermined trick-play speeds. The TP I-frame packets, 5x signal 121, 18x signal 131 and 35x signal 141, are coupled to multiplexor MUX 150 which inserts the I-frame packets for each TP speed into the normal play transport stream. Thus a valid, MPEG like, transport stream is formatted for record processing by recorder 210 and recording on tape 220.

To minimize TP bit rate, in place of repeated TP I frames, frame repeats or holding times, may be implemented by writing empty P-frames between I frames in the video stream. An empty P-frame results in the decoder predicting from the previous frame, i.e. the TP I frame. Alternatively, frame repeats may be implemented by setting the DSM_trick_mode_flag in the PES layer and calculating the Presentation Time Stamp and Decode Time Stamp PTS/DTS values such that each TP I frame is presented the necessary number of frame times apart. Either frame repeat method produces the same result. However, the second method requires no extra processing of the TP stream on playback and hence, adds no extra cost to the unit. However, the second method requires that the optional DSM_trick_mode_flag is supported in advanced television decoders. With this second method, the extra processing is implemented in the advanced television decoder. Either frame repeat method may implemented during speed specific stream generation in blocks 145, 160 and 170.

The inventive trick-play stream generation techniques described above were employed to produce trick-play speeds of 5x, 18x and 35x with a spatial resolution of 720 x 480 pixels, and an effective trick-play data rate of 2.0 Mbps. The various trick-play speeds were evaluated and may be summarized by the following points:

Data for each trick-play speed was generated representing independent low-resolution (720 x 480 pixels), MPEG compatible transport streams.

Each TP stream contains only intra-coded frames thus allowing the same trick-play stream to be used for both Fast Forward and Fast Reverse TP modes.

To retain a 16:9 aspect ratio, the actual spatial image size is sampled to 720 x 384 pixels, with the remaining area above and below the TP image black.

The temporal resolution is such that a constant three-frame holding time is used resulting in an effective rate of 10 frames per second.

Each I frame of the trick-play streams comprises a selection of sampled macroblocks from the original stream. The bit rate of 2.0 M. bits/sec. and three-frame holding time allows most AC coefficients to remain in the selected macroblocks for typical test material.

The overall subjective spatial resolution is fair, being dependent on the amount of motion and image complexity in the source material. A picture rate of 10 fps provides good temporal resolution. The trick-play data stream may be decoded to produce recognizable trick-play video images and hence is acceptable for tape search usage.

The inventive low-resolution real-time trick-play mode previously discussed produces recognizable spatial images at a relatively high temporal resolution. However, as already mentioned, this mode may be used if an advanced television receiver/decoder unit is operable at lower resolution, for example, such as that produced by CCIR recommendation 601. However, if operation at a lower resolution is not provided, then trick-play data must be derived having nominally the same spatial resolution, i.e. the same pixel count as the original source. FIGURE 2 illustrates an inventive exemplary system for generating full-resolution, real-time trick-play streams. Three trick-play speeds of 5 times, 18 times and 35 times are illustrated. The difference between the full-resolution scheme of FIGURE 2 and the low-resolution scheme illustrated in FIGURE 1, is in data extraction and processing block 105, and stream generation blocks 155, 165 and 175.

The transport stream decoding and intra detection depicted in blocks 20, 30, 40, 50, 60, and 70 operate and function as described for the low resolution TP system of FIGURE 1. As described for the low resolution TP system, the purpose of the data extraction and processing stage, block 105, is to extract only intra information which is required for forming trick-play streams and to perform any processing which is required to guarantee the syntactic and semantic correctness of the resulting TP I-frame. The functionality of block 105 differs from that of block 100 in that the regenerated I-frame must have the same resolution, or pixel count, as the original data stream. Hence, all intra macroblocks are used to reconstruct the new TP I-frame. Since no MBs are deleted, no re-encoding of DC transform coefficients is required.

The major function of processing block 105 is the removal of AC coefficients from each macroblock which, as a consequence of the trick-play bit-rate cannot be accommodated in the new TP I-frame. The low TP channel bit-rate, nominally 2 M. bit/sec, forces a trade-off between the number of AC coefficients used, i.e. spatial resolution, and the temporal resolution, or frame update rate of the trick-play stream. This spatial versus temporal trade-off was also present in the derivation of the low-resolution stream. However, in a full-resolution frame, i.e. same pixel count, the DC coefficients alone are likely to represent more bits than all the coefficients, both AC and DC assembled in a low-resolution TP frame. Thus any limited inclusion of even a few AC coefficients in each full-resolution macroblock will produce a significant reduction in the temporal resolution, i.e. the frame update time will be lengthened, with more frame repeats. Thus to facilitate constant temporal resolution in full-resolution trick-play streams, a system may employ only the DC coefficients of each macroblock with all AC coefficients being discarded. In addition, discarding the AC coefficients reduces processing complexity since only variable-length decoding of the DPCM value of the DC coefficient is required. FIGURE 2 illustrates an exemplary system where each trick-play speed has the same bit rate, and thus the same I-frame memory may be shared between the three TP speeds.

As discussed previously, if the original HDTV video images were generated by interlaced scanning, then an optional processing step may be included to remove interlace "flicker" exhibited by frozen fields containing motion. One such method has already been described. However, since this exemplary high resolution TP system uses only DC transform coefficients, a simpler and more efficient method may be provided by setting the frame_pred_frame_dct flag in the picture_coding_extension section to '1'. This flag indicates that all MBs were frame encoded, thus a previously field-coded block, which could produce 'flicker', is decoded as a frame-coded block. The result is that each field is placed in either the upper or lower portion of a block and any 'flicker' is removed. This method of flicker elimination also reduces the number of bits used in the macroblock_modes section since the dct_type flag can no longer be present if frame_pred_frame_dct_ is set to '1'.

The reconstructed TP I-frame is assembled in memory 115, and coupled to three trick-play stream generation stages, 5 times speed depicted in block 155, 18 times speed in block 165 and 35 times speed in block 175. The exemplary system of FIGURE 2 assumes that each trick-play stream has the same effective bit-rate and hence the same approximate temporal resolution. As discussed previously, not every reconstructed TP I-frame is used for each speed. However TP I-frame utilization may be further limited for the following reason. Although each TP I-frame has the same number of coefficients, for example DC only, each TP I-frame may not have the same number of bits since the DC coefficients are variable length encoded. Therefore, a constant temporal resolution or frame holding time, cannot be fixed for each trick-play stream. Instead the frame holding time will vary slightly over time with the number of bits required to encode or form each TP I-frame. For each trick-play speed, the respective "stream generation" stages, 155, 165 and 175, wait until enough bits have been accumulated in buffer 105 to encode a TP I-frame. Then if the TP I-frame accumulated in the buffer at the time is a new TP I-frame, i.e. one which has not yet been encoded in the specific trick-play speed, the TP I-frame is encoded and the number of bits used will be subtracted from those available. If every I-frame was the same size and each trick play speed was allocated the same effective bit-rate, this scheme would be equivalent to that described for the low-resolution system and the frame refresh period would be constant for all speeds. The reconstructed TP I-frames are read from memory 115 and packaged by stream generators 155, 165 and 175 to form a MPEG compatible transport streams in exactly the same way as detailed for the low-resolution system.

The inventive full spatial resolution trick-play stream generation technique described above was evaluated at an effective trick-play data rate of 2.0 Mbps, for trick-play speeds of 5x, 18x and 35x. The performance may be summarized as follows:

An independent, TP I-frame-only MPEG compatible transport stream may be recorded for each trick-play speed.

The temporal resolution varies with scene complexity and is lower, having longer frame holding times than the low spatial resolution trick-play system previously described. The average and the variation in holding times experienced for typical source material are shown in the following table:

| TP SPEED | AVERAGE HOLDING TIME IN FRAMES | VARIATION IN FRAMES |
|---|---|---|
| 5X | 5 FRAMES | 5 - 8 FRAMES |
| 18X | 5 FRAMES | 5 - 8 FRAMES |
| 35X | 5 FRAMES | 5 - 8 FRAMES |

**Note:** Because an identical effective trick-play bit-rate is used for all speeds, the temporal resolution will always be similar (if not identical) for each speed.

Each TP I-frame uses only DC coefficients.

The overall quality of spatial resolution is only fair since only DC coefficients are used. The quality of temporal resolution may vary between poor and fair, depending on the level of complexity within the TP encoded material. However, the resulting trick-play images are recognizable and acceptable for tape search usage.

The major differences between real-time trick-play and pre-recorded trick-play data stream derivation, result from the constraints of cost and lack of complexity imposed in a consumer recorder/player. The consumer unit must derive and record the trick-play data stream while recording normal replay data, i.e. the trick-play data stream is derived in real-time. With pre-recorded material, trick-play data streams may be derived directly from an original picture source rather than from a compressed MPEG encoded stream. Speed specific TP data streams may be derived independently of one another and independently from the actual recording event. Thus pre-recorded trick-play data may be derived in non-real time, possibly at non-standard or slower frame repetition rates. Since the constraints of the consumer real-time method no longer apply, the quality of trick-play reproduction achieved by pre-recorded material may be significantly higher.

A first inventive method of pre-recorded TP data derivation provides a spatial resolution of for example, CCIR Rec. 601 having a resolution of 720 x 480 pixels, regardless of the original HDTV stream resolution. A second inventive method constructs a trick-play stream of the same resolution, i.e. pixel count, as the original HDTV material.

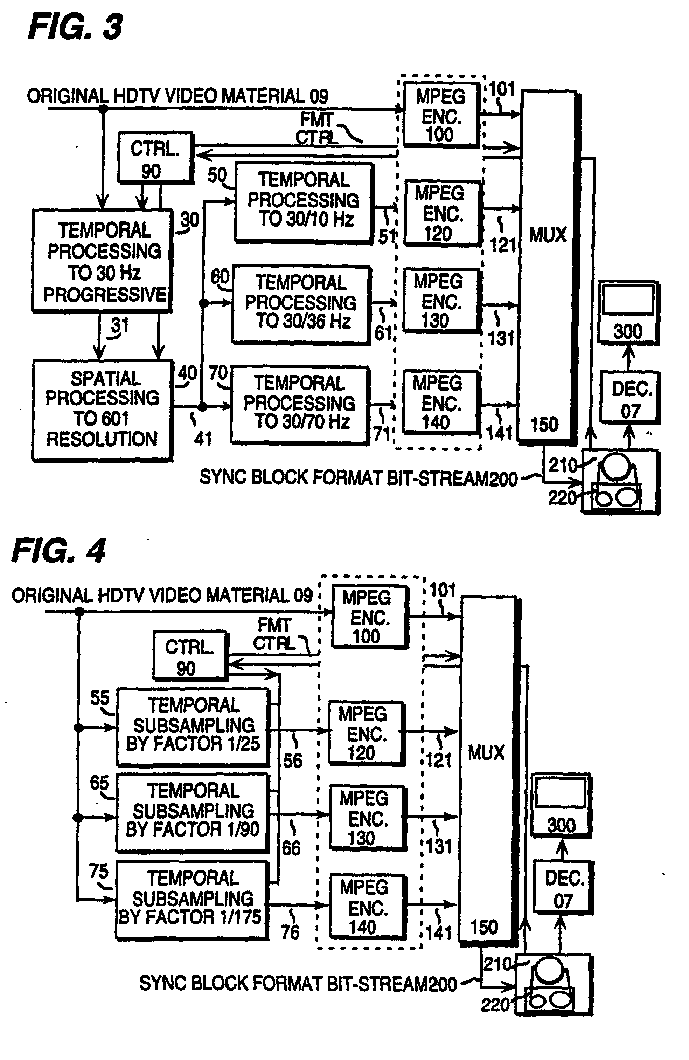

FIGURE 3 illustrates an exemplary block diagram showing an inventive method for generating low-resolution, pre-recorded trick-play data streams. Regardless of the format of the original HDTV video material 09, temporal processing block 30, performs temporally subsampling which produces a 30 Hz, progressive signal 31. The operation of this stage may differ depending on whether the original source material is progressive with a 59.94/60 Hz frame rate or interlaced with a 29.97/30 Hz frame rate. With progressively scanned source material, the frame rate may be reduced by dropping every second frame from the sequence. By dropping alternate frames a progressive sequence results having half the temporal resolution of the original source material. With interlaced source material, the frame rate remains the same but only one field from each frame is used. This processing results in a progressive sequence of half the vertical resolution and the same frame rate.

The progressively scanned frames, signal 31 is coupled to block 40, which generates a lower resolution signal having, for example, the resolution delivered by CCIR Rec. 601. Each Progressively scanned frame is resampled to 720 x 384 pixels to retain the 16:9 aspect ratio, and padded with black upper and lower borders to produce a 'letter-box' format of 720 x 480 pixels.

The HDTV signal is now represented by signal 41, having a lower spatial resolution of 720 x 480 pixels, progressively scanned with a 30 Hz frame rate. Signal 41 is coupled to blocks 50, 60, 70 which implement speed-dependent temporal subsampling. Each trick-play stream is constructed to have the same temporal resolution or frame holding time of 2 frames, i.e. every frame will be repeated once. Therefore, at N times trick-play speed, the frame rate is reduced from 30 Hz to 30/2N Hz. Thus, the resulting recorded frame rates are as follows, 5x becomes 30/10 Hz, 18x becomes 30/36 Hz and 35x becomes 30/70 Hz. Since every frame is presented twice and the display rate is 30 Hz, the effective speed of scene content remains correct at each TP speed.

The temporal subsampling blocks 50, 60, 70, generate output bit streams 51, 61 and 71 respectively, which are coupled to respective MPEG encoders 120, 130 and 140 to format MPEG compatible bit streams. Since the MPEG compatible encoding is the same for each speed, and because in a pre-recording environment real-time processing is not necessary, the same MPEG encoding hardware may be used to encode the normal-play stream and each trick-play stream. This commonalty of usage is indicated by the broken line enclosing the MPEG encoder blocks 100, 120, 130, and 140. The temporally subsampled bit streams 51, 61 and 71 are MPEG encoded as I-frames. Each I-frame is repeated once by employing the DSM_trick_play_flag, located in the PES layer as described previously. The resulting MPEG compatible streams representing normal play speed NP, stream 101, and trick-play speeds of 5x, stream 121, 18x, stream 131 and 35x, stream 141, are coupled for record formatting by multiplexor 150. Multiplexor 150 effectively selects between the various MPEG streams to generate a sync block format signal 200, suitable for record processing by record replay system 210 and writing to tape 220. As described earlier, the use of predetermined TP speeds allows speed specific TP data to be positioned, or recorded, at specific sync block locations within recorded tracks. Thus multiplexor 150 formats sync block signal 200 to locate speed specific TP I frame data at specific sync block locations within the recorded tracks. These specific locations facilitate reproduction at the various specific TP speeds.

FIGURE 6 is a partial block diagram illustrating a further inventive arrangement of the non-real-time "trick-play" apparatus of FIGURE 3. Speed specifically processed TP signals 51, 61 and 71 are coupled to memories 520, 530 and 540 which store the 5 times, 18 times and 35 times processed digital image signals respectively. The original HDTV signal 09 is also stored in memory 500. Production of the prerecorded media or tape is facilitated by the sequential selection between the various stored digital signal sources to form an output signal which is MPEG encoded by encoder 100 and recorded on the media. A multiplexor 150 is controlled to select between the various digital signal sources to form an output signal for MPEG encoding. The MPEG encoded signal 200 has the various signal components arranged such that a recording may be replayed at normal and trick play speeds. Thus the inventive arrangement of FIGURE 6 facilitates the non-real-time, and independent derivation of both normal play and trick play digital signal sources for encoding as MPEG compatible bit streams.

FIGURE 7 is a partial block diagram illustrating another inventive arrangement of the non-real-time "trick-play" apparatus of FIGURE 3. In FIGURE 7 both normal play and trick play processed digital signals 09, 51, 61 and 71 are coupled for encoding as MPEG compatible bit streams by encoder 100. With non-real-time signal processing and pre-recorded material preparation, signals 09, 51, 61 and 71 may be derived separately and individually coupled for MPEG encoding by a single encoder 100. The individually coded MPEG bit streams 101, 121, 131 and 141 are stored in memories 550, 560, 570 and 580 representing normal play and 5x, 18x and 35x bit streams respectively. Memories 550, 560, 570 and 580 produce output signals 501, 521 531 and 541 which are coupled to multiplexor 150 which is controlled responsive to recorder 210 to generate an MPEG compatible record bit stream formatted such as to provide reproduction at normal play speed and at the predetermined "trick-play" speeds.

The exemplary, low spatial resolution TP system illustrated in FIGURE 3, and described above, produces trick-play quality significantly higher than that attainable from real-time derived trick-play streams. The results produced may be summarized as follows.

During recording, an independent, I-frame only, low-resolution (720 x 480 pixel) MPEG compatible stream is written to tape for each trick-play speed.

The actual spatial image size is 720 x 384 pixels, to retain 16:9 aspect ratio, presented in a "letter box" format.

The temporal resolution is effectively 15 frames/second for each trick-play speed and produces good to excellent quality which remains constant for each speed.

The spatial resolution produced by a 2.0 Mbps data rate and 720 x 480 pixels resolution is good to very good, depending on the complexity of the source material.

Overall, the trick-play image quality exhibited with this scheme is very high.

The low-resolution pre-recorded trick-play system shown in FIGURE 3 and describe above produces good quality spatial images at a relatively high temporal resolution. However, such a low-resolution method may be used providing the advanced television decoder/receiver unit is able support the lower resolution display format.

FIGURE 4 is an exemplary block diagram of an inventive full-resolution, pre-recorded trick-play stream generation system, providing trick-play speeds of, 5x, 18x and 35x. As previously discussed, pre-recorded trick play data stream derivation may be generated from the original, uncompressed, source material. FIGURE 4 illustrates the generation of normal-play and trick-play bit streams, however these may be generated independently of one another, directly from the HDTV source material. Since this system provides full-resolution, no spatial sub-sampling is required and hence less processing is required than that shown in FIGURE 3. Since the original, uncompressed, source material may be used, frames which are to be intra-coded may be chosen exactly to suit the trick play speed, rather than selecting I frames from an encoded stream. In addition a constant temporal refresh rate can be maintained, which is more pleasing to the user.

The original HDTV video signal 09 is shown coupled to MPEG encoder 100 which generates an MPEG stream 101 for normal play speed operation. Signal 09 is also coupled for temporal subsampling in blocks 55, 65 and 75 respectively. For a trick-play speed of N times, only every Nth source frame may be utilized for coding. However, depending on a desired trade-off between spatial and temporal resolution, the actual frames used for encoding may be closer to every 5Nth or 8Nth frame in order to provide an acceptable spatial resolution. Hence frame holding times, or temporal resolution, are similar to those of the real-time, full-resolution system described earlier.

Having selected a frame holding or update time, for example, every 5Nth frame for each N times trick-play speed the HDTV stream, signal 09, is temporally sub-sampled for each TP speed. The 5 times TP stream is derived in block 55 which temporally sub-samples by a factor of 1/5N, or 1/25, i.e. 1 frame in 25 is selected to generate output signal 56. Similarly, the 18 times TP stream is derived in block 65, which temporally sub-samples by a factor of 1/5N, or 1/90 and generates output signal 66. The 35 times TP stream is derived in block 75, which temporally sub-samples by a factor of 1/5N, or 1/175 and generates output signal 76. The three sub-sampled TP bit stream signals, 56, 66 and 76 are coupled for MPEG encoding in encoder blocks 120, 130 and 140 respectively.

Since MPEG compatible encoding is the same for each speed, and because real-time processing is not necessary in a pre-recording environment, the same MPEG encoding hardware may be used to encode the normal-play stream and each trick-play stream. This commonalty of. usage is indicated by the broken line enclosing the MPEG encoder blocks 100, 120, 130, and 140. The temporally subsampled bit streams 56, 66 and 76 are MPEG encoded as I-frames. Because the frame update time is constant throughout each trick-play stream, so is the number of bits allocated for each I-frame. The frame holding times, or I-frame repeats may implemented by employing the DSM_trick_play_flag as previously described. The resulting MPEG transport streams representing normal play speed NP, stream 101, and trick-play speeds of 5x, stream 121, 18x, stream 131 and 35x, stream 141, are coupled for record formatting by multiplexor 150. Multiplexor 150 effectively selects between the various MPEG streams to generate a sync block format signal 200, suitable for record processing by record replay system 210 and writing to tape 220. As previously described, predetermined TP speeds allow speed specific TP data to be positioned, or recorded, at specific locations within recorded tracks. Thus multiplexor 150 formats sync block signal 200 to locate speed specific TP I frame data at specific sync block locations which facilitate reproduction at the various specific TP speeds.

The inventive arrangements of FIGURES 6 and 7 may also be applied the non-real-time "trick-play" generation arrangement of FIGURE 4. As has been described, the arrangements of FIGURES 6 and 7 may facilitate the independent derivation of normal play and trick play digital signals for subsequent formatting and MPEG encoding for pre-recorded tape production or user controlled video on demand service.

The constraints of retaining full spatial and temporal resolution, result in a trick-play quality which is very similar to that achieved by the full-resolution real-time method. However, this pre-recording method has an advantage that the frame holding time is constant. The trick-play stream generation technique described provides trick-play speeds of 5x, 18x and 35x, having full spatial resolution, and an effective trick-play bit rate of 2.0 Mbps. The performance may be summarized as follows:

During recording, an independent, I-frame only, MPEG stream is written to tape for each trick-play speed.

The spatial resolution is the same as the source material.

The temporal resolution is fixed having a 5 frame holding time.

Each I-frame uses all DC and some AC coefficients.

The overall spatial quality is fair. Recovered trick-play images are recognizable and are acceptable for tape search purposes.

The following table summarizes trick-play quality achieved by the various inventive methods disclosed.

|  | REAL-TIME TRICK PLAY STREAM GENERATION | NON-REAL-TIME TRICK PLAY STREAM GENERATION |
|---|---|---|
| FULL RESOLUTION TRICK PLAY MODES | SPATIAL QUALITY: poor to fair, only DC coefficients used.<br><br>TEMPORAL QUALITY: poor to acceptable, variable 5-8 frame holding times | SPATIAL QUALITY: poor to fair, DC & some AC coefficients used.<br><br>TEMPORAL QUALITY: poor to acceptable, constant 5 frame holding time. |
| LOW RESOLUTION TRICK PLAY MODES | SPATIAL QUALITY: poor to good, depends on material, patchwork of MBs used.<br>TEMPORAL QUALITY: good, constant 3 frame holding time. | SPATIAL QUALITY: good to very good, depends on material,<br><br>TEMPORAL QUALITY: very good, constant 2 frame holding time. |

In view of the constraints discussed previously, the highest trick-play quality may be achieved, in both real-time and pre-recorded material, by the use of lower-resolution trick-play data. However, the advanced television receiver/decoder must support the use of a low resolution mode. If full-resolution trick-play modes are utilized, the quality provided may be enhanced by manipulation of various parameters. For example, raising the effective bit-rate available for each trick-play speed, will allow an increase in resolution. However, a minimum bit-rate of approximately 2.0 Mbps is required. If the number of "Trick Play" speeds provided is reduced, for example to two in each direction, then the effective bit-rate for each remaining speed may be increased. The effective temporal resolution, or number of frame repeats, results from the trade-off between temporal and spatial resolution. Hence either parameter may be optimized depending on the desired application.

## Claims

1. Method for generating an MPEG compatible digital image representative signal for recording which facilitates reproduction at more than one speed, said method including the steps of:

   a) receiving a data stream comprising an MPEG compatible digital image representative signal (09);
   b) extracting only intra coded data (71) from said data stream;
   c) storing (110) pre-determined intra coded data (103), including DC and selected AC discrete cosine transform coefficients, from said extracted intra-coded data (71) to form an intra-coded frame (111) having a lower spatial resolution than said MPEG compatible digital image representative signal,
   wherein said DC coefficients of said intra-coded data belong to corresponding predetermined intra-coded macroblocks (MB1, MB3),
   and wherein, when forming said intra-coded frame, in each case the predicted DC coefficient for the first block of a predetermined intra-coded macroblock (MB3) is predicted from an immediately preceding predetermined macroblock (MB1) and is re-encoded correspondingly;

d) periodically retrieving an intra-coded frame (111) from the stored frames having reduced spatial resolution at a rate related to a predetermined trick play speed, thereby providing (145, 160, 170) a temporal resolution in accordance with the selected reproduction speed, wherein said trick play speed determined intra-coded frames are stored to form trick play speed specific intra-coded frames (121, 131, 141),

and wherein either a trick play speed specific intra-coded frame is repeated by inserting an empty P frame to replace corresponding ones of said trick play speed specific intra-coded frames,

or a DSM-trick-play-flag is set in a Packetized Elemental Stream layer of said MPEG compatible signal to repeat corresponding ones of said trick play speed specific intra-coded frames;

e) sequentially multiplexing (150) said periodically selected intra-coded frames (121, 131, 141) with said data stream (10) to form an MPEG compatible bit stream (200) ;

f) recording (210) said MPEG compatible bit stream.

2. Method according to claim 1, comprising an additional step of selecting, from said extracted intra-coded data (71), predetermined intra-coded data by reading a look-up table.

3. Method according to claim 1, comprising an additional step of selecting, from said extracted intra-coded data (71), predetermined intra-coded data by performing a predetermined calculation.

4. Method according to one of claims 1 to 3, wherein said step e) additionally comprises a step of controlling (FMT CTRL) said sequential selection of said periodically selected frame (121,131, 141) to facilitate reproduction of said MPEG compatible bit stream (200) at a replay speed different than normal replay speed.

5. Method according to one of claims 1 to 4, wherein said sequential selection is controlled responsive to a format control signal (FMT CTRL) which includes a control signal (211) from a recorder (210) recording said MPEG compatible bit stream (200).

6. Method according to one of claims 1 to 5, wherein said predetermined intra-coded macroblocks comprise luminance and chrominance blocks (BLK0 - BLK5).

7. Method according to claim 6, wherein said predetermined macroblocks contain two upper blocks denoted 0 and 1 and two lower blocks denoted 2 and 3, the method comprising an additional step of copying blocks 0 and 1 to blocks 2 and 3 within macroblocks which are field coded.

8. Method according to one of claims 1 to 7, wherein said intra-coded frame having reduced spatial resolution (71) comprises 720 x 480 pixels.

9. Method according to one of claims 1 to 8, wherein said selected AC discrete cosine transform coefficients are selected in accordance with a predetermined number of bits allocated per macroblock.

**Patentansprüche**

1. Verfahren zur Erzeugung eines mit MPEG kompatiblen digitalen, Bilder darstellenden Signals zur Aufzeichnung, das die Wiedergabe bei mehr als einer Geschwindigkeit erleichtert, umfassend die Schritte:

a) Empfangen eines Datenstroms, der ein mit MPEG kompatibles digitales, Bilder darstellendes Signal (09) umfasst;

b) Extrahieren nur intra-kodierter Daten (71) aus dem Datenstrom;

c) Speichern (110) vor-bestimmter intra-kodierter Daten (103), die Gleichstrom- und ausgewählte diskrete-Cosinus-Transformations-Wechselstrom-Koeffizienten enthalten, aus den extrahierten intra-kodierten Daten (71), um ein intra-kodiertes Vollbild (111) zu bilden, das eine niedrigere räumliche Auflösung hat als das mit MPEG kompatible digitale, Bilder darstellende Signal; wobei die Gleichstrom-Koeffizienten der intra-kodierten Daten zu entsprechenden vorbestimmten intra-kodierten Makroblöcken (MB1, MB3) gehören; und wobei bei Bildung des intra-kodierten Vollbilds in jedem Fall der vorhergesagte Gleichstrom-Koeffizient für den ersten Block eines vorbestimmten intra-kodierten Makroblocks (MB3) von einem unmittelbar vorhergehenden vorbestimmten Makroblock (MB1) vorhergesagt und entsprechend neu kodiert wird;

d) periodisches Wiedergewinnen eines intra-kodierten Vollbildes (111) aus den gespeicherten Vollbildern mit verminderter räumlicher Auflösung mit einer auf eine vorbestimmte Trick-Wiedergabe-Geschwindigkeit bezogenen Rate, um so eine zeitliche Auflösung gemäß der ausgewählten Wiedergabe-Geschwindigkeit zu erzeugen (145, 160, 170), wobei durch die Trick-Wiedergabe-Geschwindigkeit bestimmte intra-kodierte Vollbilder gespeichert werden, um für die Trick-Wiedergabe-Geschwindigkeit spezifische intra-kodierte Vollbilder (121, 131, 141) zu bilden, und wobei entweder ein für die Trick-Wiedergabe-Geschwindigkeit spezifisches intra-kodiertes Vollbild wiederholt wird, in dem ein leeres P-Vollbild eingefügt wird, um entsprechende für die Trick-Wiedergabe-Geschwindigkeit spezifische intra-kodierte Vollbilder zu ersetzen, oder in eine paketisierte elementare Strom-Schicht des mit MPEG kompatiblen Signals ein DSM-Trick-Wiedergabe-Kennzeichen gesetzt wird, um entsprechende der für die Trick-Wiedergabe spezifischen intra-kodierten Vollbilder zu wiederholen;

e) sequentielles Multiplexen (150) der periodisch ausgewählten intra-kodierten Vollbilder (121, 131, 141) mit dem Datenstrom (10), um einen mit MPEG kompatiblen Bit-Strom zu bilden (200);

f) Aufzeichnen (210) des mit MPEG kompatiblen Bit-Stroms.

2. Verfahren nach Anspruch 1, das als zusätzlichen Schritt die Auswahl von vorbestimmten intra-kodierten Daten aus den extrahierten intra-kodierten Daten (71) durch Lesen einer Nachschlage-Tabelle umfasst.

3. Verfahren nach Anspruch 1, das den zusätzlichen Schritt der Auswahl von vorbestimmten intra-kodierten Daten aus den extrahierten intra-kodierten Daten (71) durch Ausführung rahierten intra-kodierten Daten (71) durch Ausführung einer vorbestimmten Berechnung umfasst.

4. Verfahren nach einem der Ansprüche 1 bis 3, bei dem Schritt e) zusätzlich den Schritt der Steuerung (FMT CTRL) der sequentiellen Auswahl des periodisch ausgewählten Vollbildes (121, 131, 141) umfasst, um die Wiedergabe des mit MPEG kompatiblen Bit-Stroms (200) bei einer Wiedergabe-Geschwindigkeit zu erleichtern, die von der normalen Wiedergabe-Geschwindigkeit abweicht.

5. Verfahren nach einem der Ansprüche 1 bis 4, bei dem die sequentielle Auswahl als Reaktion auf ein Format-Steuersignal (FMT CTRL) gesteuert wird, das ein Steuersignal (211) von einem Recorder (210) enthält, der den mit MPEG kompatiblen Bit-Strom aufzeichnet.

6. Verfahren nach einem der Ansprüche 1 bis 5, bei dem die vorbestimmten intra-kodierten Makroblöcke Luminanz- und Chrominanz-Blöcke (BLK0 - BLK5) umfassen.

7. Verfahren nach Anspruch 6, bei dem die vorbestimmten Makroblöcke zwei obere, mit 0 und 1 bezeichnete Blöcke und zwei untere, mit 2 und 3 bezeichnete Blöcke enthalten, wobei das Verfahren den zusätzlichen Schritt des Kopierens der Blöcke 0 und 1 in Blöcke 2 und 3 innerhalb von Makroblöcken umfasst, die Halbbild-kodiert sind.

8. Verfahren nach einem der Ansprüche 1 bis 7, bei dem das intra-kodierte Vollbild eine verminderte räumliche Auflösung (71) hat, die 720 x 480 Pixel umfasst.

9. Verfahren nach einem der Ansprüche 1 bis 8, bei dem die ausgewählten diskreten-Cosinus-Transformations-Wechselstrom-Koeffizienten gemäß einer vorbestimmten Zahl von pro Makroblock zugeordneten Bits ausgewählt werden.

## Revendications

1. Procédé de génération d'un signal représentatif d'une image numérique compatible MPEG pour l'enregistrement qui facilite la reproduction à plus d'une vitesse, ledit procédé comprenant les étapes de :

a) réception d'un train de données comprenant un signal représentatif d'une image numérique compatible MPEG (09) ;

b) extraction uniquement des données intra-codées (71) à partir dudit train de données;

c) mémorisation (110) de données intra-codées prédéterminées (103), y compris de coefficients de transformée en cosinus discrète DC et AC sélectionnés, provenant desdites données intra-codées extraites (71) en vue de former une image intra-codée (111) ayant une résolution spatiale inférieure à celle dudit signal représentatif d'une image numérique compatible MPEG,

dans lequel lesdits coefficients DC desdites données intra-codées appartiennent à des macroblocs intra-codés prédéterminés correspondants (MB1, MB3);

et dans lequel, lors de la formation de ladite image intra-codée, dans chaque cas le coefficient DC prédit pour le premier bloc d'un macrobloc intracodé prédéterminé (MB3) est prédit à partir d'un macrobloc prédéterminé immédiatement précédent (MB1) et est codé à nouveau de manière correspondante;

d) extraction périodique d'une image intra-codée (111) parmi les images mémorisées ayant une résolution spatiale réduite à un débit lié à une vitesse de lecture modifiée prédéterminée, fournissant ainsi (145, 160, 170) une résolution temporelle conformément à la vitesse de reproduction sélectionnée, où lesdites images intra-codées déterminées à la vitesse de lecture modifiée sont mémorisées en vue de former des images intra-codées spécifiques à la vitesse de lecture modifiée (121, 131, 141),

et dans lequel soit une image intra-codée spécifique à la vitesse de lecture modifiée est répétée en insérant une image P vide pour remplacer des images correspondantes des images intra-codées spécifiques à la vitesse de lecture modifiée, soit un indicateur de lecture modifiée DSM est mis dans une couche de Train élémentaire paquétisé dudit signal compatible MPEG afin de répéter des images correspondantes desdites images intra-codées spécifiques à la vitesse de lecture modifiée;

e) multiplexage temporel (150) desdites images intra-codées sélectionnées périodiquement (121, 131, 141) avec ledit train de données (10) en vue de former un train binaire compatible MPEG (200);

f) enregistrement (210) dudit train binaire compatible MPEG.

2. Procédé selon la revendication 1, comprenant une étape supplémentaire de sélection, parmi lesdites données intra-codées extraites (71), de données intra-codées prédéterminées en lisant une table de consultation.

3. Procédé selon la revendication 1, comprenant une étape supplémentaire de sélection, parmi lesdites données intra-codées extraites (71), de données intra-codées prédéterminées en exécutant un calcul prédéterminé.

4. Procédé selon l'une des revendications 1 à 3, dans lequel ladite étape e) comprend de plus une étape de commande (CMDE FMT) de ladite sélection séquentielle de ladite image périodiquement sélectionnée (121, 131, 141) afin de faciliter la reproduction dudit train binaire compatible MPEG (200) à une vitesse de lecture différente de la vitesse de lecture normale.

5. Procédé selon l'une des revendications 1 à 4, dans lequel ladite sélection séquentielle est commandée en réponse à un signal de commande de format (CMDE FMT) qui comporte un signal de commande (211) provenant d'un magnétoscope (210) enregistrant ledit train binaire compatible MPEG (200).

6. Procédé selon l'une des revendications 1 à 5, dans lequel lesdits macroblocs intra-codés prédéterminés comprennent des blocs de luminance et de chrominance (BLC0 à BLC5).

7. Procédé selon la revendication 6, dans lequel lesdits macroblocs prédéterminés contiennent deux blocs supérieurs désignés 0 et 1 et deux blocs inférieurs désignés 2 et 3, le procédé comprenant une étape supplémentaire de copie des blocs 0 et 1 dans les blocs 2 et 3 dans des macroblocs qui sont codés par demi-image.

8. Procédé selon l'une des revendications 1 à 7, dans lequel ladite image intra-codée ayant une résolution spatiale réduite (71) comprend 720 x 480 pixels.

9. Procédé selon l'une des revendications 1 à 8, dans lequel lesdits coefficients de transformée en cosinus discrète sélectionnés AC sont sélectionnés conformément à un nombre prédéterminé de bits attribués par macrobloc.

EP 0 787 409 B1

## FIG. 1

## FIG. 2

## FIG. 3

ORIGINAL HDTV VIDEO MATERIAL 09

FMT CTRL

MPEG ENC. 100 — 101

CTRL. 90

50 — TEMPORAL PROCESSING TO 30/10 Hz — 51

MPEG ENC. 120 — 121

30

TEMPORAL PROCESSING TO 30 Hz PROGRESSIVE

60 — TEMPORAL PROCESSING TO 30/36 Hz — 61

MPEG ENC. 130 — 131

31

MUX 150

SPATIAL PROCESSING TO 601 RESOLUTION

40 70 — TEMPORAL PROCESSING TO 30/70 Hz — 71

MPEG ENC. 140 — 141

41

300

DEC. 07

210
220

SYNC BLOCK FORMAT BIT-STREAM 200

## FIG. 4

ORIGINAL HDTV VIDEO MATERIAL 09

MPEG ENC. 100 — 101

FMT CTRL

CTRL. 90

55 — TEMPORAL SUBSAMPLING BY FACTOR 1/25 — 56

MPEG ENC. 120 — 121

65 — TEMPORAL SUBSAMPLING BY FACTOR 1/90 — 66

MPEG ENC. 130 — 131

MUX 150

75 — TEMPORAL SUBSAMPLING BY FACTOR 1/175 — 76

MPEG ENC. 140 — 141

300

DEC. 07

210
220

SYNC BLOCK FORMAT BIT-STREAM 200

# FIG. 5

MB1  MB2  MB3

DC

BLK 0 | BLK 1    BLK 0 | BLK 1    BLK 0 | BLK 1

NEW

BLK 2 | BLK 3    BLK 2 | BLK 3    BLK 2 | BLK 3

Cb    Cb    Cb

BLK 4    BLK 4   NEW   BLK 4

Cr    Cr    Cr

BLK 5    BLK 5    BLK 5

SELECTED    NON-SELECTED    SELECTED

# FIG. 6

# FIG. 7